Europäisches Patentamt

European Patent Office

Office européen des brevets

(11) Publication number: **0 139 775**
**B1**

(12) **EUROPEAN PATENT SPECIFICATION**

(45) Date of publication of patent specification: **30.09.87**

(51) Int. Cl.⁴: **B 65 G 17/24**

(21) Application number: **83110474.0**

(22) Date of filing: **20.10.83**

(54) An article conveying and accumulating device.

(43) Date of publication of application:
**08.05.85 Bulletin 85/19**

(45) Publication of the grant of the patent:
**30.09.87 Bulletin 87/40**

(84) Designated Contracting States:
**AT BE CH DE FR GB IT LI NL SE**

(56) References cited:
**DE-A-2 702 724**
**FR-A-2 023 539**
**GB-A- 894 825**
**US-A-3 136 105**

(73) Proprietor: **AB TETRA PAK**
**Box 61**
**S-221 00 Lund (SE)**

(72) Inventor: **Inoko, Kenji**
**1818-51, Koshinobara**
**Yasu-Cho, Yasu-District Shiga-Pref. (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

The invention relates to an article conveying device comprising a first conveyor for carrying a succession of articles of substantially same size, and having a discharging zone; a pusher reciprocatable across said conveyor in said discharging zone; and a second conveyor located adjacent said discharging zone of the first conveyor for receiving articles transferred with each stroke of said pusher, said second conveyor being driven with a constant travelling movement in the direction of the pushing movement of the pusher.

A device of this kind has been shown from GB—A—894 825. This prior art device serves as a diverting device for selectively diverting the articles successively arriving on the first conveyor onto the second conveyor or onto a third or fourth conveyor which then deliver the articles, at the same rate as they arrive on the first conveyor, onto further treatment or discharging station.

In contrast to this prior art device the device according to the invention is intended to be used as an article accumulating device for accumulating, by repeated strokes of the pusher, groups of articles which are then discharged as a group.

In prior art accumulating devices, the pusher transfers with each stroke one or more articles onto a receiving surface which is a stationary table or bed for slidingly receiving the articles. An article being transferred and then released by the pusher is being deposited on the receiving surface in a stationary position corresponding to the return point of the pusher. With the next stroke of the pusher transferring a further article, the previously transferred article will receive an impact and a sudden acceleration from the new article and will be pushed further by a distance corresponding to the width of one article, as seen in the pushing direction. This sequence of operations will be continued until the foremost article on the receiving surface will be stopped e.g. by a stopper or abutment wall, in which case the desired predetermined number of articles has been accumulated on the receiving surface and may be further transferred by a further pusher or the like onto a further receptacle, conveyor or similar.

During this process of accumulating articles on the receiving surface, each article will repeatedly undergo sudden impacts and accelerations from the articles subsequently transferred by the pusher. These repeated impacts and acceleration may damage or impair the articles or the contents thereof. The friction occurring between the articles and the receiving surface, as the articles are transferred onto the receiving surface, may be a further cause of damage or wear to the articles.

It is accordingly an object of the invention to provide an article conveying device of the aforementioned kind which operates as an article accumulating device and wherein the risk of damage to the articles or the contents thereof, during the process of accumulating the articles on the receiving surface, is minimized.

For achieving this object the invention provides a device of the aforementioned kind which is characterized in that for accumulating a plurality of articles successively pushed by said pusher on said second conveyor serving as a receiving surface, said second conveyor has a stop for intercepting the articles at a predetermined distance from said first conveyor, said second conveyor being driven with a travelling speed substantially equal to the pushing speed of said pusher.

With this device, the advantage is obtained that an article which is being transferred by the pusher onto the receiving surface and then released by the pusher, will not be decelerated and deposited in a stationary position at the returning point of the pusher, but will continue to travel on the receiving conveyor at substantially the same speed as the pushing movement, until the article will eventually abut against a stopper or abutment wall at the far end of the receiving conveyor. The following article transferred during the next stroke of the pusher will therefore not hit against an article previously deposited at the front end of the receiving surface, but will also continue to travel until it will abut against the preceding article which is in contact with the stopper. This means that every article transferred by the pusher will undergo only once a sudden deceleration due to impact against the stopper or the previously transferred article, but the articles on the receiving surface will not undergo repeated accelerations and decelerations by repeated impacts and stepwise forward pushing, as in the conventional devices. Accordingly, the risk of damage to the articles, or to the contents thereof, is greatly reduced. The articles, after having been stopped by the stopper or abutment wall of the receiving conveyor, will continue to be pressed against said stopper by the frictional force exerted by the continuously travelling receiving conveyor. This constant pressing force, however, does not result in further accelerations or decelerations of the articles and will therefore not contribute to the risk of damaging the articles.

According to a preferred embodiment of the invention said receiving conveyor has a receiving surface composed of support elements each being freely rotatable about a horizontal axis perpendicular to the pushing direction of said pusher. These support elements may preferably be cylindrical rods rotatably mounted on pins projecting from two endless chains.

With this preferred embodiment, the frictional force exerted by the conveyor on the articles will be substantially zero, and therefore also the constant force by which the articles are pressed against the stopper or abutment wall by the continuously moving receiving conveyor will also be substantially zero. This utilization of freely rotatable support elements is possible because the receiving conveyor travels at the same speed as the pushing speed of the pusher, and therefore the articles transferred by the pusher onto the receiving conveyor do not have to be accelerated by the receiving conveyor.

An embodiment of the invention will be described with reference to the accompanying drawings, wherein

fig. 1 is a plan view showing the discharging end of the conveyor and the adjacent receiving surface;

fig. 2 is a corresponding side view;

fig. 3 is a sectional view showing a detail of the receiving conveyor;

fig. 4 is a side view of the end portion of the receiving conveyor;

fig. 5 is a schematic plan view of an entire article conveying and accumulating device.

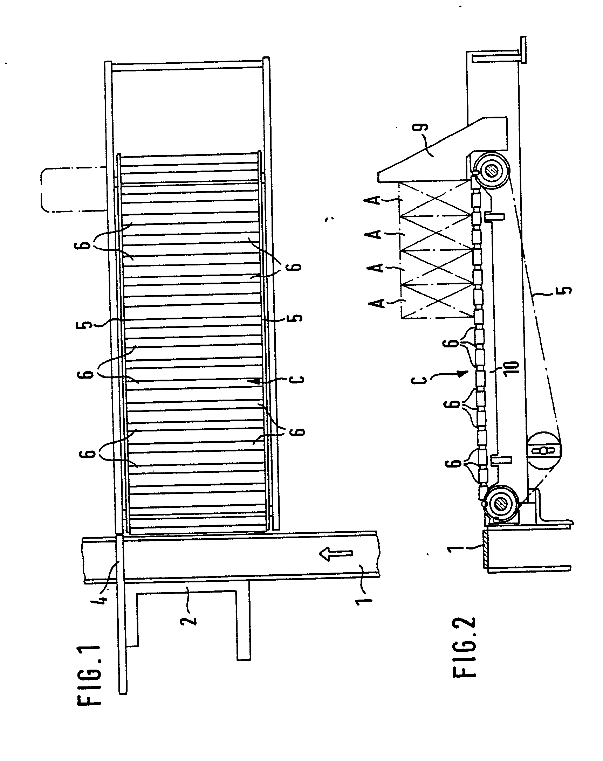

According to fig. 1 and 2 a plurality of substantially identical articles A, such as boxes or box-shaped articles, are conveyed on a conveyor 1 and are then accumulated on a receiving surface C by repeated strokes of a pusher 2 which is reciprocatable across the conveyor 1 in front of a stopper or abutment wall 4.

The receiving surface C is structured as a conveyor comprising two spaced parallel chains 5 which are driven in unison around suitable guide rolls and driving sprockets, and on guides 10 an a plurality of spaced hollow support rods or tubes 6 each extending across the width of the conveyor C and being freely rotatable mounted at either end by a suitable bearing 8 on a pin 7 which projects from the corresponding chain 5. The pins 7 may be extensions of the axles of the links of the chains 5, or they may be additional pieces fastened to the chain 5 for example by extrusion.

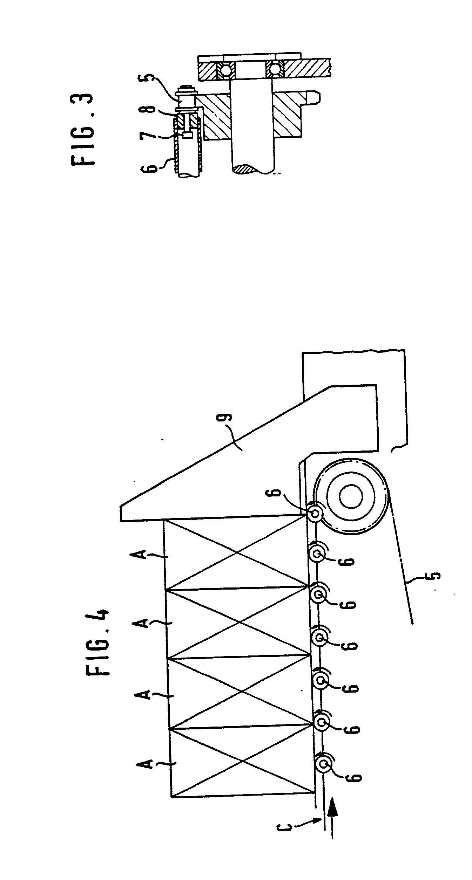

The conveyor C is continuously driven in the direction of the arrow in fig. 4, i.e. in the pushing direction of the pusher 2 perpendicular to the conveyor 1, at a constant travelling speed which is substantially equal to the pushing speed of the pusher 2, more particularly, the final speed which the pusher 2 reaches when transferring an article onto the conveyor C.

The operation of the device is as follows: The articles are being conveyed in succession on the conveyor 1, until they are intercepted by the stopper or abutment wall 4. When a predetermined number of articles, for example two, has accumulated in front of the stopper 4, the pusher 2 is actuated and pushes the articles onto the receiving conveyor C in a direction perpendicular to the direction of movement of the conveyor 1. As the conveyor 2 is travelling with the same speed as the pushing speed of the pusher 2, the articles being transferred onto the conveyor C and then released by the pusher 2 will not undergo any acceleration or deceleration, but will continue to travel on the conveyor C until they are stopped by a stopper 9 provided at the far end of the conveyor C (fig. 2 and 4). This abutting of an article A against the stopper 9 or against a previously stopped article is the only impact which an article will undergo, only once, during the entire process of accumulating the article on the receiving conveyor C.

As the receiving conveyor C continuous to be driven in the arrow direction of fig. 4, it will exert a certain force on the articles A pressing them against the stopper 9. This force, however, will be minimal owing to the possibility of the support rods 6 to freely rotate about the pins 7. Accordingly, the risk of damaging the articles A is minimized. Also, the tendency of an article transferred by the pusher onto the conveyor C to tilt owing to friction with the conveyor C will be minimized owing to both the travelling movement of the conveyor C and the freely rotatable support rods 6.

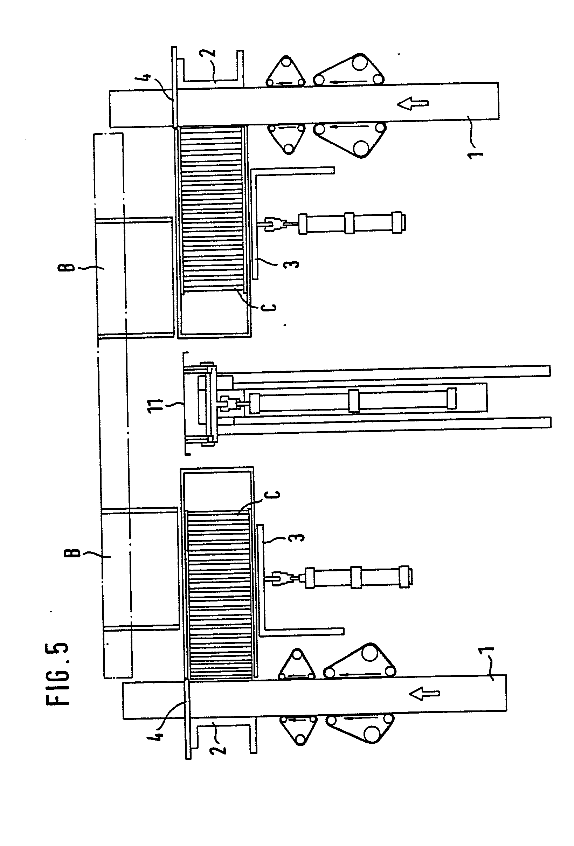

As shown in fig. 5, the whole article conveying and accumulating system may comprise a symmetrical arrangement of two conveyors 1 with associated pusher 2 and receiving conveyor C. The articles accumulated on each receiving conveyor C may be further transferred by a pusher 3 onto a tray or palette B which may then be moved in front of a further pusher 11 for pushing the whole multiplicity of articles onto a final receiving device such as a packaging container, a transporting palette or similar.

**Claims**

1. An article conveying device, comprising a first conveyor (1) for carrying a succession of articles (A) of substantially same size, and having a discharging zone;

a pusher (2) reciprocatable across said conveyor (1) in said discharging zone:

and a second conveyor (C) located adjacent said discharging zone of the first conveyor (1) for receiving articles (A) transferred with each stroke of said pusher (2), said second conveyor (C) being driven with a constant travelling movement in the direction of the pushing movement of the pusher (2) characterized in that for accumulating a plurality of articles successively pushed by said pusher (2) on said second conveyor (C) serving as a receiving surface, said second conveyor (C) has a stop (9) for intercepting the articles at a predetermined distance from said first conveyor (1), said second conveyor being driven with a travelling speed substantially equal to the pushing speed of said pusher (2).

2. A device according to claim 1, characterized in that said receiving conveyor (C) has a receiving surface composed of support elements (6), each being freely rotatable about a horizontal axis perpendicular to the pushing direction of said pusher (2).

3. A device as claimed in claim 2, wherein said receiving conveyor (C) is formed of two endless parallel chains (5) and a plurality of circular rods (6) extending between said chains (5) substantially over the whole width of the receiving conveyor (C) and being rotatably mounted on pins (7) projecting from said chains (5).

4. A device according to claim 1, characterized in that the length of the discharging zone of the first conveyor (1) and of said pusher (2) as well as the width of the second conveyor (C) are adapted to accommodate a plurality of articles to be accumulated in said discharging zone and simultaneously pushed with one stroke of the pusher (2) onto said second conveyor (C).

## Patentansprüche

1. Transportförderer für Gegenstände, mit einem ersten Förderer (1) zum Fördern einer Folge von Gegenständen (A) mit im wesentlichen gleicher Größe, der eine Entladungszone aufweist,

einem Schieber (2), der in der Entladungszone über den Förderer (1) hin- und herbewegbar ist,

und einem zweiten Förderer (C), der angrenzend an die Entladungszone des ersten Förderers (1) angeordnet ist und die mit jedem Schub des Schiebers (2) bewegten Gegenstände aufnimmt, wobei der zweite Förderer (C) mit einer konstanten Förderbewegung in Richtung der Schubbewegung des Schiebers (2) angetrieben ist, dadurch gekennzeichnet, daß zur Ansammlung einer Anzahl von nacheinander durch den Schieber (2) auf den als Aufnahmefläche dienenden zweiten Förderer (C) geschobenen Gegenständen der zweite Förderer (C) einen Anschlag (9) zum Anhalten der Gegenstände in einem vorgegebenen Abstand vom ersten Förderer (1) aufweist, wobei der zweite Förderer mit einer Fördergeschwindigkeit angetrieben wird, die im wesentlichen gleich der Schubgeschwindigkeit des Schiebers (2) ist.

2. Vorrichtung nach Anspruch 1, dadurch gekennzeichnet, daß der Aufnahmeförderer (C) eine Aufnahmefläche aus Tragelementen (6) aufweist, von denen jedes um eine zu der Schubrichtung des Schiebers (2) senkrechte, horizontale Achse frei drehbar ist.

3. Vorrichtung nach Anspruch 2, dadurch gekennzeichnet, daß der Aufnahmeförderer (C) aus zwei endlosen parallen Ketten (5) gebildet ist und daß eine Anzahl runder Stäbe (6) sich zwischen den Ketten (5) im wesentlichen über die gesamte Breite des Aufnahmeförderers (C) erstreckt und drehbar auf von den Ketten (5) vorstehenden Stiften (7) befestigt ist.

4. Vorrichtung nach Anspruch 1, dadurch gekennzeichnet, daß die Länge der Entladungszone des ersten Förderers (1) und des Schiebers (2) sowie die Breite des zweiten Förders (C) zur Aufnahme einer Anzhal von Gegenständen, die in der Entladungszone angesammelt werden und gleichzeitig mit einem Schub des Schiebers (2) auf den zweiten Förderer (C) geschoben werden, ausgebildet sind.

## Revendications

1. Dispositif de transport d'articles comprenant un premier transporteur (1) pour transporter une succession d'articles (A) d'à peu près la même dimension et ayant une zone de déchargement; un poussoir (2) pouvant exécuter un mouvement alternatif en travers dudit transporteur (1) dans la zone de déchargement; et un second transporteur (C) situé près de la zone de déchargement du premier transporteur (1) pour recevoir des articles (A) transférés avec chaque course du poussoir (2), le second transporteur (C) étant entraîné avec un mouvement constant de déplacement dans la direction du mouvement de poussée du poussoir (2), caractérisé en ce que, pour accumuler plusieurs articles successivement poussés par le poussoir (2) sur le second transporteur (C) servant de surface de réception, le second transporteur (C) comporte une butée (9) pour intercepter les articles à une distance prédéterminée du premier transporteur (1), le second transporteur étant entraîné avec une vitesse de déplacement sensiblement égale à la vitesse de poussée du poussoir (2).

2. Dispositif selon la revendication 1, caractérisé en ce que le transporteur de réception (C) a une surface de réception composée d'éléments de support (6), chacun étant librement rotatif autour d'un axe horizontal perpendiculaire à la direction de poussée du poussoir (2).

3. Dispositif selon la revendication 2, caractérisé en ce que le transporteur de réception (C) est formé de deux chaînes parallèles sans fin (5) et de plusieurs barreaux circulaires (6) s'étendant entre les chaînes (5) sensiblement sur toute la largeur du transporteur de réception (C) et montés de façon à pouvoir tourner sur des goujons (7) dépassant desdites chaînes (5).

4. Dispositif selon la revendication 1, caractérisé en ce que la longueur de la zone de déchargement du premier transporteur (1) et du poussoir (2) ainsi que la largeur du second transporteur (C) sont calculées pour correspondre à plusieurs articles à accumuler dans la zone de déchargement et poussés simultanément avec une course du poussoir (2) sur le second transporteur (C).

FIG.1

4 6 6 5 6

2

6 C 5 6

1

FIG.2

A A A A

C 9

1 6 6 6

10

5

0 139 775

FIG. 4

A A A A

C

6 6 6 6 6 6 6

6

9

5

FIG. 3

6 7 8 5

FIG.5